Europäisches Patentamt

European Patent Office

Office européen des brevets

(11) Publication number: **0 092 934**
**B1**

## EUROPEAN PATENT SPECIFICATION

(45) Date of publication of patent specification: 09.11.88

(51) Int. Cl.⁴: **G 01 V 1/38, G 01 V 1/36**

(21) Application number: 83302062.1

(22) Date of filing: 13.04.83

(54) **Method for enhancing recorded marine seismic reflection signals having undulating water bottom distortions.**

(30) Priority: 27.04.82 US 372273

(43) Date of publication of application:
02.11.83 Bulletin 83/44

(45) Publication of the grant of the patent:
09.11.88 Bulletin 88/45

(84) Designated Contracting States:
BE DE FR GB IT NL

(56) References cited:
WO-A-82/00365
GB-A-2 083 221
US-A-3 299 397
US-A-4 210 897
US-A-4 234 938
US-A-4 253 164

M. B. DOBRIN: "Introduction to Geophysical
prospecting", McGraw-Hill, Inc., 1976, pages
211, 212

(73) Proprietor: MOBIL OIL CORPORATION
150 East 42nd Street
New York New York 10017 (US)

(72) Inventor: Kalkomey, Cynthia Thomas
3408 Cardinal Lane
Irving Texas 75062 (US)
Inventor: Mason, Thomas James
7104 Elderberry Lane
Dallas Texas 75249 (US)
Inventor: Pann, Keh
1402 Chesterton Drive
Dallas Texas 75080 (US)

(74) Representative: Colgan, Stephen James et al
CARPMAELS & RANSFORD 43 Bloomsbury
Square
London WC1A 2RA. (GB)

Courier Press, Leamington Spa, England.

## Description

This invention relates to a method of determining the presence and location of seismic reflections from the earth's subsurface formations.

In marine seismic exploration, seismic energy is generated in and transmitted through the water layer above the earth's surface, is reflected from subsurface interfaces between layers of the earth, and is received by hydrophones located in the water layer or on the earth's surface at the bottom of the water layer. The hydrophone signals are recorded in the form of a seismic time section. This seismic time section contains informations that can be used to represent the characteristics of the subsurface formations.

Primary reflection signals on the seismic time section indicate the presence of a subsurface reflecting interface, and time occurrences of these primary reflection signals represent the depth of the subsurface reflecting interface. Furthermore, the time-shift or attitude of a primary reflection from trace-to-trace indicates the dip or slope of the subsurface interface.

It has long been known that seismic data collected over a deep and undulating water bottom and viewed as seismic time sections, represent a highly distorted picture of subsurface interfaces. Conventional data processing techniques of velocity analysis, normal moveout corrections, and CDP stacking are based on an undistorted model for which relatively flat underlying structures are characterized by hyperbolic moveout on seismic time sections. However, in the presence of significant water bottom distortion, flat, subsurface reflecting structures cannot be characterized by hyperbolic moveout. Consequently, stacking velocities not only become more difficult to estimate, but must be estimated at more frequent intervals in order to produce an acceptable stacked time section. Furthermore, the stacked section will be of less quality (i.e., display less trace-to-trace coherency at reflecting interfaces), and the interpretation of stacking velocities becomes more difficult.

In accordance with the present invention enhanced seismic reflection signals are produced by the elimination of undulating water bottom distortion in the recorded seismic reflection signals. Such elimination is carried out by the removal of the water layer velocity effect on the recorded seismic reflection signals and its replacement with a velocity effect that would have been present if the water layer had been replaced with a medium having the velocity of the earth medium below the water bottom. A not dissimilar technique is described generally in Chapter 7-2 of "Introduction to Geophysical Prospecting" M. B. Dobrin, (McGraw-Hill Kogakusha Ltd 1976) under the heading "Weathering Corrections", where abnormalities in seismic recordings resulting from a weathered rock layer below the earth's surface are corrected by "replacing" the weathered layer with a material of the kind below the base of the weathered zone.

According to the present invention we provide a method of marine seismic exploration in which seismic energy is generated by a plurality of seismic energy shots and is transmitted through a water layer into the earth, and seismic energy reflection signals from subsurface interfaces are recorded by a plurality of seismic energy receivers in the water layer, characterised in that undulating water bottom distortions are eliminated from the recorded seismic reflection signals by

a) producing first simulated seismic reflection signals from the recorded seismic reflection signals that would have been recorded with the receivers moved from within the water layer and placed at a location below the water bottom,

b) producing second simulated seismic reflection signals from the first simulated seismic reflection signals that would have been recorded with the receivers moved from below the water bottom and placed along a datum above the water bottom and the velocity of the medium between the water bottom and the receivers at the datum had been that of the earth medium below the water bottom,

c) producing third simulated seismic reflection signals from the second simulated seismic reflection signals that would have been recorded with said receivers located along the datum and the shots moved from within the water layer and placed at a location below the water bottom, and

d) producing fourth simulated seismic reflection signals from the third simulated seismic reflection signals that would have been recorded with the shots moved from below the water bottom and placed along the datum and the velocity of the medium between the water bottom and the shots at the datum had been that of the earth medium below the water bottom, the fourth simulated seismic reflection signals being said recorded seismic reflection signals enhanced through the elimination of undulating water bottom distortions.

The method of the invention is described below in greater detail by way of example only with reference to the accompanying drawings, in which

Fig. 1 illustrates seismic reflection paths in a marine exploration operation;

Figs. 2A—2D illustrate the processing of common receiver seismic reflection signals to a new dataum location;

Figs. 2E—2H illustrate the processing of common shot point seismic reflection signals to a new datum location; and

Fig. 3 is a flow chart of the method of the invention for shifting the seismic reflection signals to a new datum location as shown in Figs. 2A—2H.

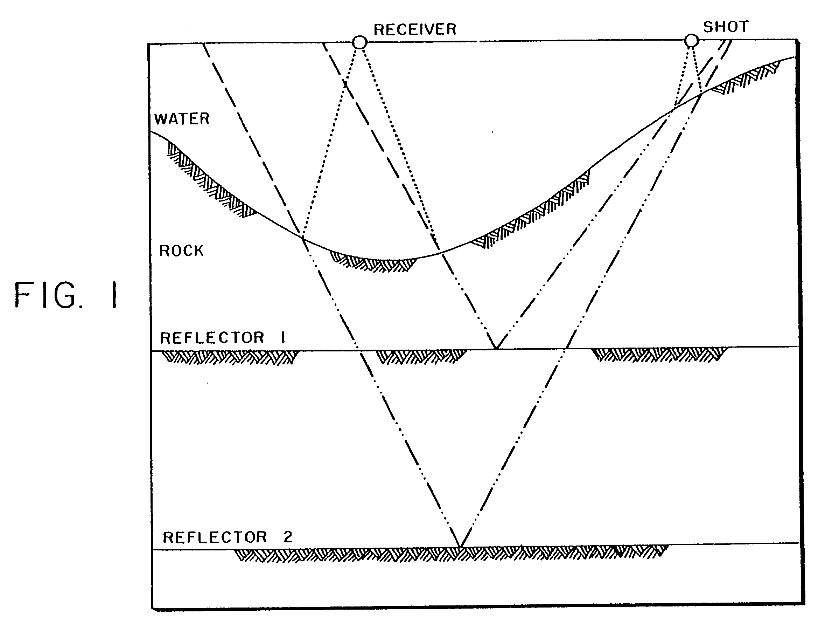

If the water layer has little velocity contrast with the immediate subwater medium, the seismic wave front penetrating that medium would remain essentially spherical. The subsequent seismic reflections from deep reflecting interfaces would then display the familiar hyperbolic moveout time delay. However, the typical situation encountered in practice is shown in Fig. 1 of the accompanying drawings.

Referring to Fig. 1, there is shown a typical situation in which a marine seismic survey is carried out over an undulating water bottom. The initial seismic reflection paths, shown as dotted lines, are bent at the water bottom following Snell's Law of refraction. Even though the reflecting interfaces are flat, the reflection points do not coincide with the midpoints between shot and receiver locations. In accordance with the invention, the seismic reflection paths are effectively replaced by the dashed lines in Fig. 1. Carrying the same geophysical reflection information, these dashed reflection paths coincide with the initial reflection paths in the below water bottom medium, but deviate from them in the water layer. This occurs because the initial reflection paths bend at the water bottom due to the velocity contrast at the interface. After reflection path replacement, there is no velocity contrast at the water bottom and the reflection paths go straight through.

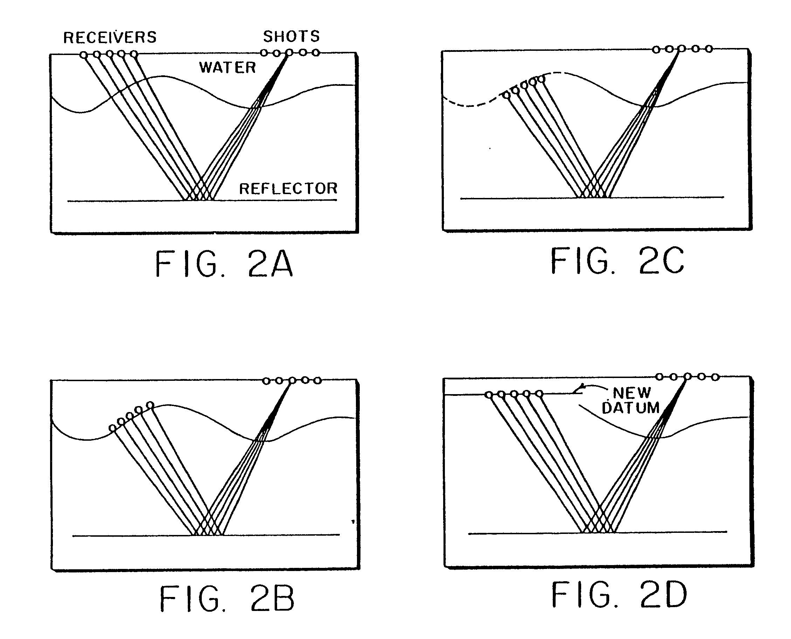

Referring now to Figs. 2A—2H, there are illustrated the steps of the water layer replacement method of the invention. Fig. 2A shows a typical situation where CDP marine seismic data are collected over an undulating water bottom. For simplicity, seismic reflection paths are shown as straight where they cross the water bottom interface. Distortions to the reflection paths occur at two separated places, firstly on the downgoing path near the shot locations and secondly on the upcoming path near the receiver locations. In Figs. 2B and 2C simulated common shot seismic reflection signals are shown with reduced reflection paths. In Fig. 2B, the upgoing reflection path has been effectively decreased or downwardly continued from the surface to the water bottom by removing the water layer velocity effect. This downwardly continued path is treated as if the receivers were displaced from within the water layer and planted at simulated receiver points along the water bottom. In Fig. 2C, the simulated receiver points are further displaced across the water bottom to simulated receiver points immediately below the water bottom. In Fig. 2D the simulated common shot seismic reflection signals are shown with increased reflection path compared with that of Fig. 2C. The upgoing reflection path has been increased or upwardly continued by treating the simulated receiver points as if they were displaced upwardly and planted at simulated receiver points along a new datum. In this upward continuation process, the water layer is effectively replaced with a medium having a velocity to match the water bottom rock velocity. In this manner, distortions incurred on the receiver side of the seismic reflection path for a common shot gather have been removed.

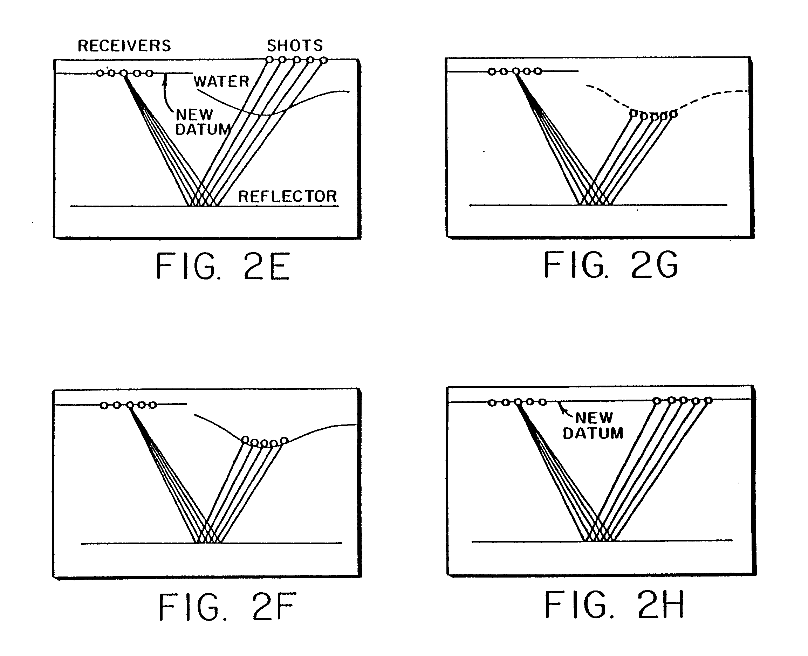

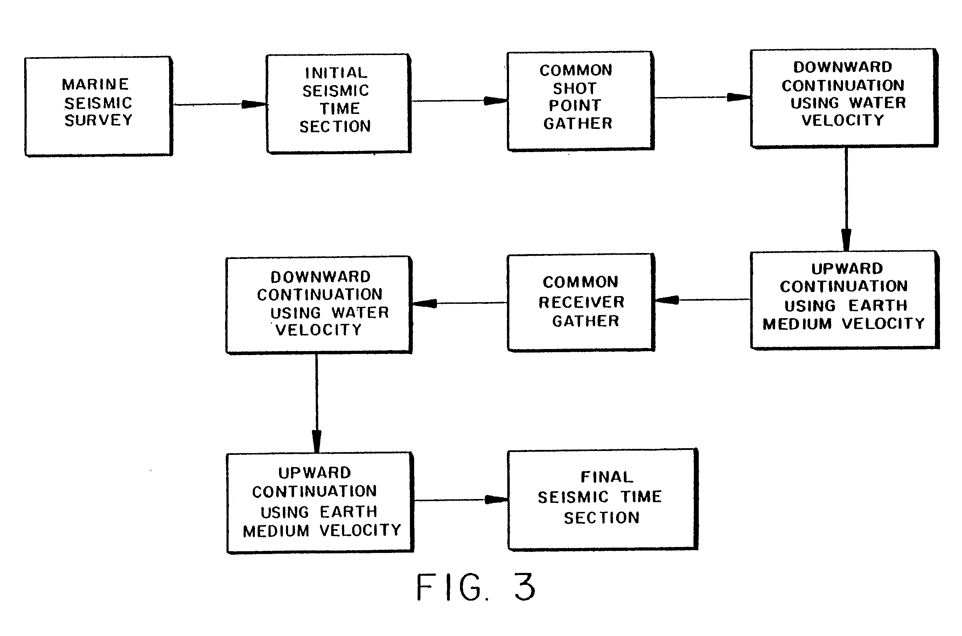

Next, the water layer replacement process is repeated for common receiver gathers utilizing the simulated common receiver points along the new datum as shown in Figs. 2E—2H. In Figs. 2F and 2G simulated common receiver seismic reflection signals are shown with reduced reflection paths. In Fig. 2F, the downgoing reflection path has been decreased or downwardly continued from the surface to the water bottom by removing the water layer velocity effect. This downwardly continued path is treated as if the shots were displaced from within the water layer and planted at simulated shot points along the water bottom. In Fig. 2G, the simulated shot points are displaced across the water bottom to simulated shot points immediately below the water bottom. In Fig. 2H the simulated common receiver seismic reflection signals are shown with increased paths compared to those of Fig. 2G. The reflection path has been increased or upwardly continued by treating the simulated shot points as if they were displaced and planted at simulated shot points along the new datum. In this upward continuation process, the water layer is effectively replaced with a medium having a velocity to match the water bottom rock velocity. In this manner, distortions incurred on the shot side of the seismic reflection path for a common receiver gather have been removed. The final seismic time section created by the water layer replacement process of the invention can now be processed by conventional data processing techniques, the seismic reflection signals now appearing to have been collected on the new datum over the replaced water layer without having experienced water bottom distortion. This procedure is further illustrated in the flow chart of Fig. 3.

Downward continuation is a computation operation by which a wave field at any depth level can be computed from a known field specified at a different level. In such an operation, the field recorded upcoming wave is initially transformed into the frequency domain. This is carried out by applying the Fourier transform to the differential equation with respect to the time variable t and only the signal frequency band is kept. A finite difference operation is then applied to the x—z variables for each of the kept frequency components. Such an operation includes a split-step time-sharing finite difference algorithm for efficient computation.

More particularly, the downward continuation of an upcoming wave is carried out in accordance with the following expressions. From the upcoming wave measured on the surface $U_s(x, z=0, t)$, where s represents shot location, the upcoming wave over the whole depth is computed by use of a total velocity gradient upcoming wave equation

$$\frac{\partial^3 u}{\partial z \partial t^2} + \frac{3V}{4}\frac{\partial^3 U}{\partial t \partial x^2} - \frac{V^2}{4}\frac{\partial^3 U}{\partial z \partial x}\frac{1}{V}\frac{\partial^3 U}{\partial t^3} = 0 \qquad (1)$$

where V, the velocity of the earth medium may vary in both x, the lateral distance variable; and z, the depth variable. To accommodate for lateral velocity variations, a split-step algorithm is implemented in the frequency domain, in which equation (1) is split into two equations:

$$\omega^2 \frac{\partial \widetilde{U}}{\partial z} + \frac{V^2}{4} \frac{\partial^3 \widetilde{U}}{\partial z \partial x^2} - \frac{jV\omega}{2} \frac{\partial^2 U}{\partial x^2} = 0 \qquad (2)$$

and

$$\frac{\partial U}{\partial z} - \frac{j\omega}{V} \widetilde{U} = 0 \qquad (3)$$

where

$$\widetilde{U} = \int_a^a U(x, z, t)e^{-j\omega t}dt \qquad (4)$$
$$(x,z,w)$$

Numerically, equation (2) is implemented with a Crank-Nicolson type finite difference scheme, and equation (3) is directly solved for each depth increment. A more detailed discussion of splitting-up techniques may be found in Marchuk, G.l. (1975), *Method of Numerical Mathematics,* Springer-Verlag and in Kjartansson, E. (1978), "Modelling and Migration with the Monochromatic Wave Equation—Variable Velocity and Attenuation", *Stanford Exploration Project* (Stanford, California: Leland Stanford Junior University) Report No. 15.

From the discussion above it will be apparent that the migration method of the invention can be practiced either with the use of analog computing apparatus such as delay lines, shift registers, drum recorders, and contour plotters, or with the use of digital computing apparatus. Thus, a digital computing system a Control Data Corporation Model 6600 General Purpose Digital Computer may be utilized along with the following input/output components:

Control Computer, 65K Memory
6602 Console Display
6681 Data Channel Converter
405 Card Reader
3447 Card Reader Controller
501 Line Printer
3256 Line Printer Controller

**Claims**

1. A method of marine seismic exploration in which seismic energy is generated by a plurality of seismic energy shots and is transmitted through a water layer into the earth, and seismic energy reflection signals from subsurface interfaces are recorded by a plurality of seismic energy receivers in the water layer, characterised in that undulating water bottom distortions are eliminated from the recorded seismic reflection signals by

a) producing first simulated seismic reflection signals from the recorded seismic reflection signals that would have been recorded with the receivers moved from within the water layer and placed at a location below the water bottom,

b) producing second simulated seismic reflection signals from the first simulated seismic reflection signals that would have been recorded with the receivers moved from below the water bottom and placed along a datum above the water bottom and the velocity of the medium between the water bottom and the receivers at the datum had been that of the earth medium below the water bottom,

c) producing third simulated seismic reflection signals from the second simulated seismic reflection signals that would have been recorded with said receivers located along the datum and the shots moved from within the water layer and placed at a location below the water bottom, and

d) producing fourth simulated seismic reflection signals from the third simulated seismic reflection signals that would have been recorded with the shots moved from below the water bottom and placed along the datum and the velocity of the medium between the water bottom and the shots at the datum had been that of the earth medium below the water bottom, the fourth simulated seismic reflection signals being said recorded seismic reflection signals enhanced through the elimination of undulating water bottom distortions.

2. A method according to claim 1, comprising the steps of

a) processing those seismic reflection signals having common shot points such that the signals appear to have been recorded at simulated receiver points below the water bottom,

b) processing the seismic reflection signals having common shot points such that the signals appear to have been recorded at a datum above the water bottom, in a medium having the velocity of the earth medium below the water bottom,

c) processing those seismic reflection signals having simulated common receiver points along the datum such that the signals appear to have been generated at simulated shot points below the water bottom, and

d) processing the seismic reflection signals having common simulated receiver points such that the signals appear to have been generated at a datum location above the water bottom in a medium having the velocity of the earth medium below the water bottom.

3. A method according to claim 1 or 2, which comprises the steps of

a) reducing the reflection paths of common shot point seismic reflection signals by removing the water layer velocity such that the receivers appear to have been displaced to first simulated receiver points immediately below the undulating water bottom on the receiver side of the reflection paths,

b) increasing the reflection paths of the common shot point seismic reflection signals by replacing the removed water velocity with the velocity of the earth medium immediately below the water bottom such that the first simulated receiver points appear to have been displaced to second simulated receiver points at a datum located above the undulating water bottom on the receiver side of the reflection paths,

c) reducing the reflection paths of seismic reflection signals having second simulated common receiver points along the datum by removing the water layer velocity such that the shot points appear to have been displaced to first simulated shot points immediately below the water bottom on the shot side of the reflection paths, and

d) increasing the reflection paths of seismic reflection signals having second simulated common receiver points by replacing the removed water layer velocity with the velocity of the earth medium immediately below the water bottom such that the first simulated shot points appear to have been displaced to second simulated shot points along the datum above the undulating water bottom on the shot side of the seismic reflection paths.

4. A method according to claim 1, comprising the steps of:

a) computing the source generated downgoing seismic energy wave,

b) recording the upcoming seismic reflection signals from subsurface interfaces within the earth,

c) downwardly continuing the recorded seismic reflection signals having common shot points to simulate receiver points below the undulating water bottom,

d) upwardly continuing the downwardly continued common shot point reflection signals to simulate receiver points along a datum located in a medium overlying the water bottom having the same velocity as the earth medium below the water bottom,

e) downwardly continuing the recorded seismic reflection signals having common simulated receiver points along the datum to simulate shot points immediately below the water bottom,

f) upwardly continuing the downwardly continued common simulated receiver reflection signals to simulate shot points along the datum and

g) recording the upwardly continued common shot point reflection signals and the upwardly continued common receiver point reflection signals at the datum location to produce a seismic record section in which the water layer effects from an undulating water bottom are eliminated.

**Patentansprüche**

1. Verfahren zur seismischen Exploration auf See, bei welchem seismische Energie durch eine Mehrzahl seismischer Energieschüsse erzeugt und durch eine Wasserschicht in die Erde übertragen wird und bei welchem Signale seismischer Reflexionsenergie von unterirdischen Grenzflächen von einer Mehrzahl von Empfängern für seismische Energien in der Wasserschicht aufgezeichnet werden, dadurch gekennzeichnet, daß Verzerrungen durch gewellten Gewässergrund von den aufgezeichneten seismischen Reflexionssignalen eliminiert werden durch

a) Erzeugen erster simulierter seismischer Reflexionssignale aus den aufgezeichneten seismischen Reflexionssignalen, die mit den Empfängern aufgezeichnet werden würden, wenn diese aus der Wasserschicht heraus und an eine Stelle unterhalb des Gewässergrundes gebracht werden,

b) Erzeugen zweiter simulierter seismischer Reflexionssignale aus den ersten simulierten seismischen Reflexionssignalen, welche mit den Empfängern aufgezeichnet werden würden, wenn diese von unterhalb des Gewässergrundes weg und längs einer vorgegebenen Bezugslinie oberhalb des Gewässergrundes gebracht werden und die Geschwindigkeit des Mediums zwischen dem Gewässergrund und dem Empfängern an der Bezugslinie diejenige wäre, die dem des Erdmediums unter dem Gewässergrund entspricht,

c) Erzeugen dritter simulierter seismischer Reflexionssignale aus den zweiten simulierten seismischen Reflexionssignalen, die mit den Empfängern aufgezeichnet werden würden, wenn diese längs der Bezugslinie angeordnet und die Schüsse von innerhalb des Wasserschicht heraus an eine Stelle unterhalb des Gewässergrundes gebracht werden, und

d) Erzeugen vierter simulierter seismischer Reflexionssignale aus den dritten simulierten seismischen Reflexionssignalen, die mit den Schüssen aufgezeichnet werden würden, wenn diese aus gem Bereich unterhalb des Gewässergrundes herausbewegt und längs der Bezugslinie angeordnet werden und die Geschwindigkeit des Mediums zwischen dem Gewässergrund und den Schüssen an der Bezugslinie diejenige ist, die das Erdmedium unterhalb des Gewässergrundes hat, wobei die vierten simulierten seismischen Reflexionssignale die aufgezeichneten seismischen Reflexionssignale sind, die durch die Eliminierung der Verzerrungen durch den wellenförmigen Gewässergrund verstärkt werden.

2. Verfahren nach Anspruch 1, aufweisend die Stufen

a) Verarbeitung derjenigen seismischen Reflexionssignale mit gemeinsamen Schußpunkten, derart, daß die Signale so erscheinen, als ob sie an simulierten Empfängerpunkten unterhalb des Gewässergrundes aufgezeichnet worden wären.

b) Verarbeitung der seimischen Reflexionssignale mit gemeinsamen Schußpunkten, so daß die Signale so erscheinen, als ob sie an einer Bezugslinie oberhalb des Gewässergrundes in einem Medium mit einer Geschwindigkeit des Erdmediums unter halb des Gewässergrundes aufgezeichnet worden wären,

c) Verarbeitung derjenigen seismischen Reflexionssignale, die simulierte gemeinsame Empfängerpunkte längs der Bezugslinien haben, so daß die Signale so erscheinen, als ob sie an simulierten Schußpunkten unterhalb des Gewässergrundes erzeugt worden wären, und

d) Verarbeitung der seismischen Reflexionssignale mit den gemeinsamen simulierten Empfängerpunkten, so daß die Signale so erscheinen, als ob sie an einer Bezugslinienstelle oberhalb des Gewässergrundes in einem Medium mit der Geschwindigkeit des Erdmediums unterhalb des Wasserbodens erzeugt wären.

3. Verfahren nach einem der Ansprüche 1 oder 2, aufweisend die Stufen

a) Verringerung der Reflexionswege der seismischen Reflexionssignale mit gemeinsamem Schußpunkt, indem die Wasserschichtgeschwindigkeit so herausgenommen wird, daß die Empfänger zu den ersten simulierten Empfängerpunkten unittelbar unterhalb des wellenförmigen Wasserbodens auf die Empfängerseite der Reflexionswege verschoben erscheinen,

b) Erhöhung der Reflexionswege der seismischen Reflexionssignale mit gemeinsamen Schußpunkt, indem die herausgenommene Wassergeschwindigkeit durch die Geschwindigkeit des Erdmediums unmittelbar unterhalb des Gewässergrundes so erzetzt wird, daß die ersten simulierten Empfängerpunkte so erscheinen, als ob sie zu den zweiten simulierten Empfängerpunkten auf einer Bezugslinie verschoben worden sind, die oberhalb des wellenförmigen Gewässergrundes auf der Empfängerseite der Reflexionswege angeordnet ist,

c) Verringerung der Reflexionswege der seismischen Reflexionssignale mit den zweiten simulierten gemeinsamen Empfängerpunkten längs der Bezugslinie durch Herausnehmen der Wasserschichtgeschwindigkeit, so daß die Schußpunkte auf die ersten simulierten Schußpunkte unmittelbar unterhalb des Gewassergrundes auf der Schußseite der Reflexionswege verschoben erscheinen, und

d) Erhöhen der Reflexionsweg der seismischen Reflexionssignale mit den zweiten simulierten gemeinsamen Empfängerpunkten, indem die herausgenommene Wasserschichtgeschwindigkeit durch die Geschwindigkeit des Erdmediums unmittelbar unterhalb des Gewässergrundes derartige ersetzt wird, daß die ersten simulierten Schußpunkte auf die zweiten simulierten Schußpunkte längs der Bezugslinie oberhalb des gewellten Wasserbodens auf der Schußseite der seismischen Reflexionswege verschoben erscheinen.

4. Verfahren nach Anspruch 1, aufweisend die Stufen:

a) Berechnen der von der Quelle erzeugten nach unten gehenden seismischen Energiewelle,

b) Aufzeichnen der nach oben kommenden seismischen Reflexionssignale von den unterirdischen Zwischenflächen innerhalb der Erde,

c) nach unten gerichtetes Forts etzen der aufgezeichneten seismischen Reflexionssignale mit gemeinsamen Schußpunkten, um Empfängerpunkte unterhalb des gewellten Gewässergrundes zu simulieren,

d) nach oben gerichtetes Fortsetzen der nach unten fortgesetzten Reflexionssignale mit gemeinsamen Schußpunkt, um längs einer Bezugslinie Empfängerpunkte in einem Medium oberhalb des Gewässergrundes zu simulieren, das die gleiche Geschwindigkeit, wie die des Erdmediums unterhalb des Gewässergrundes hat,

e) nach unten gerichtetes Fortsetzen der aufgezeichneten seismischen Reflexionssignale, die gemeinsame simulierte Empfängerpunkte längs der Bezugslinie haben, um Schußpunkte unmittelbar unterhalb des Gewässergrundes zu simulieren,

f) nach oben gerichtetes Fortsetzen der nach unten fortgesetzten simulierten Empfängerreflexionssignale, um Schußpunkte längs der Bezugslinie zu simulieren, und

g) Aufzeichnen durch nach oben fortgesetzten Reflexionssignale mit gemeinsamem Schußpunkt und der nach oben fortgesetzten Reflexionssignale mit gemeinsamen Empfängerpunkt an der Bezugslinie, um einen seismischen Aufzeichnungsabschnitt zu erzeugen, in welchem die Wasserschichteffekte von dem wellenförmigen Gewässergrund beseitigt worden sind.

**Revendications**

1. Procédé d'exploration sismique marine dans lequel de l'énergie sismique est créée par plusieurs tirs d'énergie sismique et est transmise par une couche d'eau jusqu'à la Terre, et des signaux de réflexion d'énergie sismique provenant d'interfaces souterraines sont enregistrés par plusieurs récepteurs d'énergie sismique placés dans la couche d'eau, caractérisé en ce que les distorsions du fond ondulé de l'eau sont éliminées des signaux enregistrés de réflexion sismique par les opérations suivantes:

a) la production, à partir des signaux enregistrés de réflexion sismique, de premiers signaux simulés de réflexion sismique qui auraient été enregistrés si les récepteurs avaient été déplacés hors de la couche d'eau et mis à un emplacement qui se trouve au-dessous du fond de l'eau,

b) la production, à partir des premiers signaux simulés de réflexion sismique, de seconds signaux simulés de réflexion sismique auraient été enregistrés si les récepteurs avaient été retirés de l'emplacement qui se trouve au-dessous du fond de l'eau et disposés le long d'un emplacement de référence qui se trouve au-dessus du fond de l'eau et si la vitesse du milieu placé entre le fond de l'eau et les récepteurs occupant l'emplacement de référence avait été celle du milieu terrestre présent au-dessous du fond de l'eau,

c) la production, à partir des seconds signaux simulés de réflexion sismique, de troisièmes signaux simulés de réflexion sismique qui auraient été enregistrés si les récepteurs avaient été placés à l'emplacement de référence et si les tirs avaient été déplacés de l'intérieur de la couche d'eau à un emplacement se trouvant au-dessous du fond de l'eau, et

d) la production, à partir des troisièmes signaux simulés de réflexion sismique, de quatrièmes signaux simulés de réflexion sismique qui auraient été enregistrés si les tirs avaient été éloignés de l'emplacement qui se trouve au-dessous du fond de l'eau et disposés le long de l'emplacement de référence et si la vitesse du milieu placé entre le fond de l'eau et les points de tir occupant l'emplacement de référence avait été celle du milieu terrestre présent au-dessous du fond de l'eau, les quatrièmes signaux simulés de réflexion sismique constituant les signaux enregistrés de réflexion sismique accentués par élimination des distortions dues au fond ondulé de l'eau.

2. Procédé selon la revendication 1, comprenant les étapes suivantes:

a) le traitement des signaux de réflexion sismique ayant des points de tir communs de manière que les signaux paraissent avoir été enregistrés à des emplacements simulés de récepteurs au-dessous du font de l'eau,

b) le traitement des signaux de réflexion sismique avant des points de tir communs de manière que les signaux paraissent avoir été enregistrés à un emplacement de référence qui se trouve au-dessus du fond de l'eau, dans un milieu ayant la vitesse du milieu terrestre au-dessous du fond de l'eau,

c) le traitement des signaux de réflexion sismique ayant les points communs simulés de récepteurs placés le long de l'emplacement de référence afin que les signaux paraissent avoir été créés aux points simulés de tir au-dessous du fond de l'eau, et

d) le traitement des signaux de réflexion sismique ayant des emplacement simulés communs de récepteurs tels que les signaux paraissent avoir été créés à un emplacement de référence disposé au-dessus du fond de l'eau dans un milieu ayant la vitesse du milieu terrestre présent au-dessous du fond de l'eau.

3. Procédé selon la revendication 1 ou 2, qui comprend les étapes suivantes:

a) la réduction des trajets de réflexion des signaux de réflexion sismique à points communs de tir, par suppression de la vitesse de la couche d'eau, si bien que les récepteurs paraissent avoir été déplacés à des premiers emplacements simulés de récepteurs qui se trouvent juste au-dessous du fond ondulé de l'eau sur les trajets de réflexion du côté des récepteurs,

b) l'augmentation des trajets de réflexion des signaux de réflexion sismique à points de tir communs par remplacement de la vitesse supprimée de l'eau par la vitesse du milieu terrestre qui se trouve juste au-dessous du fond de l'eau, afin que les premiers emplacements simulés de récepteurs paraissent avoir été déplacés à des seconds emplacements simulés de récepteurs qui ont un emplacement de référence au-dessus du fond ondulé de l'eau du côté des trajets de réflexion tourné vers les récepteurs,

c) la réduction des trajets de réflexion des signaux de réflexion sismique ayant les seconds emplacement simulées de récepteurs communs suivant l'emplacement de référence par suppression de la vitesse de la couche d'eau afin que les points de tir paraissent avoir été déplacés à des premiers points de tir simulés juste au-dessous du fond de l'eau du côté des trajets de réflexion tourné vers les points de tir, et

d) l'augmentation des trajets de réflexion des signaux de réflexion sismique ayant les seconds emplacements simulés de récepteurs communs par remplacement de la vitesse supprimée de la couche d'eau par la vitesse du milieu terrestre présent juste au-dessous du fond de l'eau, si bien que les premiers points simulés de tir paraissent avoir été déplacés à des seconds points simulés de tir suivant l'emplacement de référence audessus du fond ondulé de l'eau du côté des trajets de réflexion sismique tourné vers les points de tir.

4. Procédé selon la revendication 1, comprenant les étapes suivantes:

a) le calcul de l'onde descendante d'énergie sismique créée par des sources,

b) l'enregistrement des signaux ascendants de réflexion sismique provenant des interfaces souterraines, à l'intérieur de la Terre,

c) le prolongement vers le bas des signaux enregistrés de réflexion sismique ayant des points de tir communs afin que des emplacements de récepteurs soient simulés au-dessous du fond ondulé de l'eau,

d) le prolongement vers le haut des signaux de réflexion à points de tir communs, poursuivis vers le bas, afin que des emplacements de récepteurs soient simulés suivant un emplacement de référence qui se trouve dans un milieu disposé audessus du fond de l'eau et ayant la même vitesse que le milieu terrestre présent au-dessous du fond de l'eau,

e) le prolongement vers le bas des signaux enregistrés de réflexion sismique ayant les emplacements communs simulés de récepteurs le long de l'emplacement de référence afin que des points de tir soient simulés juste au-dessous du fond de l'eau,

f) le prolongement vers le haut des signaux simulés de réflexion à récepteur commun qui sont prolongés vers le bas afin que des points de tir soient simulés le long de l'emplacement de référence, et

g) l'enregistrement des signaux de réflexion à points de tir communs, prolongés vers le haut, et des signaux de réflexion à emplacements de récepteurs communs, prolongés vers le haut, à l'emplacement de référence, afin qu'une coupe d'enregistrement sismique dans laquelle les effets de la couche d'eau dus au fond ondulé de l'eau sont éliminés, soit formée.

FIG. 1

FIG. 2C

FIG. 2D

FIG. 2A

FIG. 2B

FIG. 2G

FIG. 2H

FIG. 2E

FIG. 2F

FIG. 3

0 092 934